# EUROPÄISCHE PATENTSCHRIFT

(11) **EP 2 707 888 B1**
(45) Veröffentlichungstag und Bekanntmachung des Hinweises auf die Patenterteilung: **23.03.2016**
(21) Anmeldenummer: 12726411.7
(22) Anmeldetag: 04.06.2012
(51) Int. Cl.: H01H 9/54, H01H 33/59

(54) **SCHALTVORRICHTUNG**
SWITCHING DEVICE
DISPOSITIF DE COMMUTATION

(30) Priorität: 24.06.2011 DE 102011078034
(43) Veröffentlichungstag der Anmeldung: 19.03.2014
(73) Patentinhaber: Siemens Aktiengesellschaft, 80333 München (DE)
(72) Erfinder: GAMBACH, Herbert, 91080 Uttenreuth (DE); GRIEPENTROG, Gerd, 91468 Gutenstetten (DE); JÄNICKE, Lutz-Rüdiger, 15831 Mahlow (DE); MAIER, Reinhard, 91074 Herzogenaurach (DE); TRAPP, Norbert, 13589 Berlin (DE)
(86) Internationale Anmeldenummer: PCT/EP2012/060492
(87) Internationale Veröffentlichungsnummer: WO 2012/175319

(56) Entgegenhaltungen:
- WO-A1-01/95355
- WO-A1-2011/057675
- DE-B1- 2 454 944

## Beschreibung

Die Erfindung betrifft eine Schaltvorrichtung zum Schalten bipolarer DC-Ströme in Hochspannungsnetzen.

DC-Ströme in Hochspannungsnetzen können mit Hilfe bekannter Schaltprinzipien, welche auf dem Stromnulldurchgang des Wechselstroms beruhen, nicht unterbrochen werden. Bekannte Konzepte für Schalter zum Schalten von bipolaren DC-Strömen in Hochspannungsnetzen beruhen auf der Anwendung von Komponenten und Teilsystemen, wie sie für die Hochspannungs-Gleichstrom Konverterstationen verwendet werden. Diese Konzepte haben den Nachteil, dass der Stromfluss im normalen Betriebszustand durch die abschaltbaren Halbleiterbauelemente erfolgt und damit nicht-vernachlässigbare Verlustleistungen auftreten.

Es ist Aufgabe der vorliegenden Erfindung, eine Schaltvorrichtung zum Schalten bipolarer DC-Ströme in Hochspannungsnetzen anzugeben, die den oben genannten Nachteil vermeidet.

Das Dokument "WO 01/95355 A1" offenbart eine Schaltvorrichtung gemäß dem Oberbegriff des Anspruchs 1.

Diese Aufgabe wird durch eine Schaltvorrichtung mit den Merkmalen von Anspruch 1 gelöst. Die abhängigen Ansprüche betreffen vorteilhafte Weiterbildungen der Erfindung.

Die erfindungsgemäße Schaltvorrichtung zum Schalten bipolarer DC-Ströme in Hochspannungsnetzen umfasst wenigstens zwei elektromechanische Schalteinheiten und wenigstens eine Halbleiter-Schaltanordnung. Die vorgenannten Elemente sind so angeordnet, dass der DC-Strom in einem ersten Schaltzustand der Schaltvorrichtung über wenigstens eine der elektromechanischen Schalteinheiten führbar ist, ohne dabei über die Halbleiter-Schaltanordnung zu fließen. In einem zweiten Schaltzustand der Vorrichtung ist der Strom hingegen über die Halbleiter-Schaltanordnung führbar.

Der erfindungsgemäße Aufbau führt vorteilhaft zu einem einfacheren, modularen Aufbau und damit verbundenen verringerten Herstellungskosten. Besonders vorteilhaft ist aber, dass im leitenden Zustand der Strom nicht unter erheblichen Verlusten über Halbleiterschalter fließt, sondern über die elektromechanische Schalteinheit.

Die Halbleiter-Schaltanordnung kann so ausgeführt sein, dass sie Strom in beide Richtungen oder nur in eine Richtung führen kann. Um den Aufbau der Halbleiter-Schalteinrichtung einfach und damit die Kosten gering zu halten, ist es jedoch vorteilhaft, wenn die Halbleiter-Schaltanordnung nur für Stromfluss in eine Richtung ausgeführt wird. Des Weiteren kann die Halbleiter-Schaltanordnung wiederum aus mehreren Halbleiterzellen bestehen, die in der Lage sind, eine Teilspannung der DC-Hochspannung aufzunehmen. Jede dieser Halbleiterzellen wiederum kann nach an und für sich bekannten Konzepten wie beispielsweise dem als MMC-Schaltung bekannten Konzept aufgebaut sein.

Bei den elektromechanischen Schalteinheiten handelt es sich zweckmäßig um einen oder eine Kombination mehrerer Schalter, wie sie zum Schalten von Wechselströmen eingesetzt werden. Insbesondere können hierfür elektromechanische Schalter eingesetzt werden, deren Unterbrecher- und Isoliereigenschaften auf dem Vakuumschaltprinzip oder einem Schaltprinzip mit einem Lösch- und Isoliergas beruhen.

In einer bevorzugten Ausgestaltung umfasst die Schaltvorrichtung einen weitere elektromechanische Schalteinheit. Die weitere elektromechanische Schalteinheit ist als Verbindung eines der Anschlusspunkte der Halbleiter-Schaltanordnung zum anderen Pol der DC-Leitung geschaltet. Hierdurch ist es vorteilhaft möglich, die Halbleiter-Schaltanordnung auch dann mit Spannung zu versorgen und damit betriebsbereit zu halten, wenn der Nennstrom vollständig über die elektromechanischen Schalteinheiten fließt.

In einer weiteren Ausgestaltung und Weiterbildung der Erfindung weist die Schaltvorrichtung vier elektromechanische Schalteinheiten in Vollbrückenanordnung oder H-Brückenanordnung auf. Dabei ist zweckmäßig die Halbleiter-Schaltanordnung als Verbindung der Mittelpunkte der beiden Brückenzweige geschaltet. Hierdurch ist es vorteilhaft möglich, die Halbleiter-Schaltanordnung nach einem Ausschaltvorgang vollständig spannungsfrei zu schalten.

Bevorzugt umfasst die Halbleiter-Schaltanordnung eine Einrichtung zur Aufnahme der Schaltenergie. Hierdurch kann die beim Ausschaltvorgang umzusetzende Schaltenergie abgebaut werden.

Für einen Abschaltvorgang, beispielsweise wenn ein Kurzschluss auf der DC-Leitung vorliegt, wird wenigstens eine der elektromechanischen Schalteinheiten geöffnet. Zweckmäßig werden dabei die in einer elektromechanischen Schalteinheiten enthaltenen Schalter geöffnet und die hieraus entstehende Lichtbogenspannung bewirkt, dass der Strom auf die eingeschaltete Halbleiter-Schaltanordnung kommutiert. Hierdurch kommt es zu einem Stromnulldurchgang in der abschaltenden elektromechanischen Schalteinheit und damit zur Unterbrechung des Stromflusses in dieser elektromechanischen Schalteinheit.

Sind die elektromechanischen Schalteinheiten in einer Brückenschaltung angeordnet, so kann zum Abschalten des Stroms beispielsweise jeweils eine elektromechanische Schalteinheit jedes Brückenzweigs verwendet werden, wobei die elektromechanische Schalteinheit im ersten Brückenzweig in Stromflussrichtung vor der Halbleiter-Schaltanordnung angeordnet ist und die elektromechanische Schalteinheit des anderen Brückenzweigs in Stromflussrichtung nach der Halbleiter-Schaltanordnung.

Nach dem Kommutieren des Stroms zur Halbleiter-Schaltanordnung wird diese kontrolliert abgeschaltet. Danach können in einer Weiterbildung der Erfindung die verbleibenden elektromechanischen Schalteinheiten geöffnet und damit eine komplette Trennung erzielt werden.

Bevorzugte, jedoch keinesfalls einschränkende Ausführungsbeispiele für die Erfindung werden nunmehr anhand der Figuren der Zeichnung näher erläutert. Dabei sind die Merkmale schematisiert dargestellt. Es zeigen
- Figur 1: eine erste Schaltvorrichtung mit einer Vollbrückenschaltung aus Leistungsschaltern,
- Figur 2: die erste Schaltvorrichtung beim Unterbrechen eines Stromflusses,
- Figur 3: die erste Schaltvorrichtung nach Abschalten des Stroms,
- Figur 4: Verfahrensschritte bei der Abschaltung eines Stroms,
- Figur 5: eine zweite Schaltvorrichtung im Nennbetrieb,
- Figur 6: die zweite Schaltvorrichtung beim Abschalten eines Stroms,
- Figur 7: Verfahrensschritte der Abschaltung bei der zweiten Schaltvorrichtung,
- Figur 8: eine dritte Schaltvorrichtung mit zwei Leistungsschaltern.

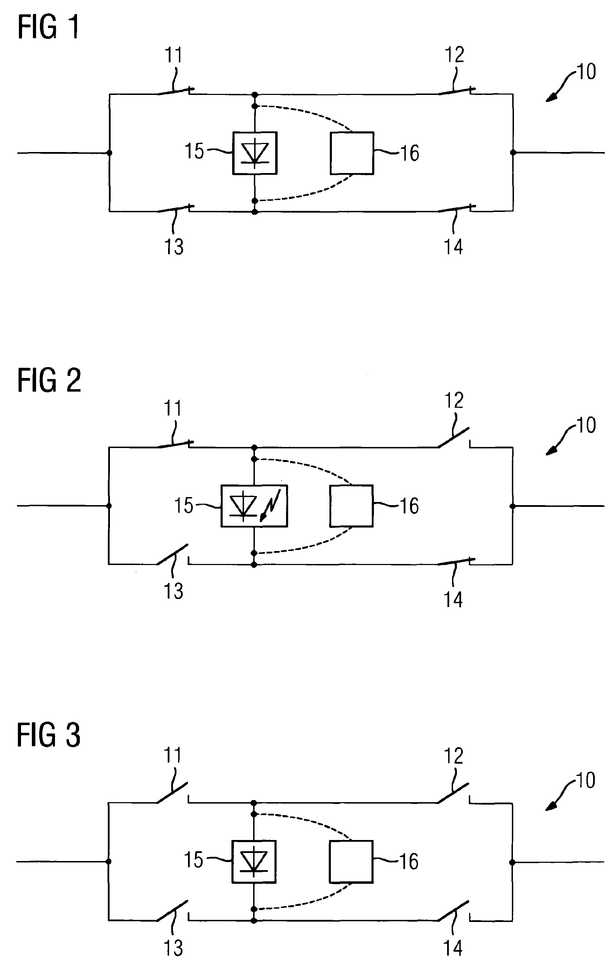

Figur 1 zeigt ein erstes Ausführungsbeispiel für die Erfindung. Die in Figur 1 gezeigte erste Schaltvorrichtung 10 weist eine Vollbrückenanordnung bestehend aus einem ersten bis vierten Leistungsschalter 11...14 auf. Die Brückenschaltung weist dabei in üblicher Weise zwei parallele Zweige auf, in denen jeweils zwei der Leistungsschalter 11...14 in Serie geschaltet sind. Die Mitte zwischen dem ersten und dem zweiten Leistungsschalter 11, 12 ist über eine Halbleiter-Schaltanordnung 15 mit der Mitte zwischen dem dritten und dem vierten Leistungsschalter 13, 14 verbunden. Parallel zur Halbleiter-Schaltanordnung 15 ist ein energieabsorbierendes Element 16 vorgesehen.

Bei der Halbleiter-Schaltanordnung 15 handelt es sich im vorliegenden Ausführungsbeispiel um eine Reihenschaltung von an und für sich bekannten Modulen eines Modular Multilevel Converters (MMC). Bei dem energieabsorbierenden Element 16 handelt es sich um eine Mehrzahl von Hochspannungsableitern.

Figur 1 zeigt neben dem grundsätzlichen Aufbau der ersten Schaltvorrichtung diese gleichzeitig in einem ersten Schaltzustand, der dem Normalbetrieb bei Stromleitung entspricht. Dazu sind alle vier Leistungsschalter 11...14 geschlossen. In diesem ersten Schaltzustand kann also der Strom ungehindert über die beiden Zweige der Brückenanordnung fließen. Die Leistungsschalter 11...14 weisen einen sehr geringen Widerstand auf. Durch die Beschaltung ist die Halbleiter-Schaltanordnung 15 im Wesentlichen spannungsfrei.

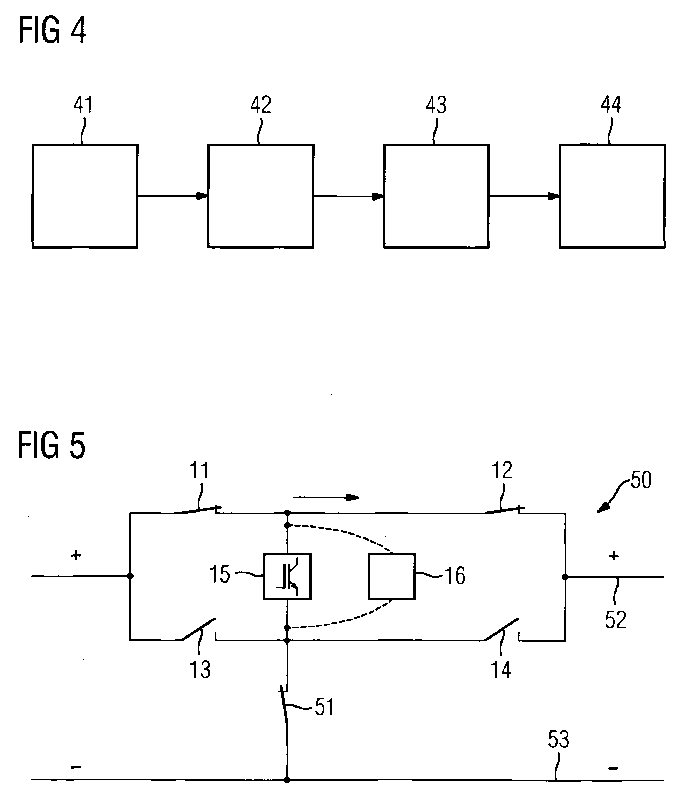

Anhand der Figuren 2 bis 4 wird im Folgenden beschrieben, wie ein Ausschaltvorgang vonstatten geht. Figur 4 zeigt dabei einen ersten bis vierten Verfahrensschritt 41 bis 44. Im ersten Verfahrensschritt 41 wird die Halbleiter-Schaltanordnung 15 eingeschaltet. Sie geht also in den leitenden Zustand über, führt aber immer noch keinen wesentlichen Strom, da sie nicht unter Spannung steht. Im zweiten Verfahrensschritt 42 wird nun der zweite Leistungsschalter 12 und der dritte Leistungsschalter 13 geöffnet. Bei ausreichendem Spannungsabfall über den Schaltstrecken dieser Leistungsschalter 12, 13 kommutiert der Strom zwangsweise in die Halbleiter-Schaltanordnung 15 und die Lichtbögen in den Leistungsschaltern 12, 13 werden gelöscht. Die Leistungsschalter 12, 13 isolieren ab diesem Zeitpunkt.

Im dritten Verfahrensschritt 43 wird die Halbleiter-Schaltanordnung 15 abgeschaltet und die im DC-Kreis gespeicherte Energie in dem energieabsorbierenden Element 16 abgebaut. Im vierten, optionalen Verfahrensschritt 44 öffnen die beiden anderen Leistungsschalter 11, 14 und trennen somit die Halbleiter-Schaltanordnung 15 komplett vom DC-Netz. Für das Wiedereinschalten werden die Leistungsschalter 11...14 eingeschaltet, während die Halbleiter-Schaltanordnung 15 inaktiv bleibt.

Figur 2 zeigt den Zustand der ersten Schaltvorrichtung 10 nach dem zweiten Verfahrensschritt 42, Figur 3 zeigt den Zustand der ersten Schaltvorrichtung 10 nach dem vierten Verfahrensschritt 44.

Ein zweites Ausführungsbeispiel in Form einer zweiten Schaltvorrichtung 50 wird anhand der Figuren 5 bis 7 erläutert. Figur 5 zeigt die zweite Schaltvorrichtung 50 im Normalbetrieb, d.h. bei Stromleitung. Die zweite Schaltvorrichtung 50 weist analog zur ersten Schaltvorrichtung 10 eine Vollbrücke aus Leistungsschaltern 11...14 auf. Weiterhin weist die zweite Schaltvorrichtung 50 eine Halbleiter-Schaltanordnung 15 auf, wobei die Halbleiter-Schaltanordnung 15 ebenso wie in der ersten Schaltvorrichtung 10 verschaltet ist.

Im Unterschied zur ersten Schaltvorrichtung 10 weist die zweite Schaltvorrichtung 50 einen weiteren Leistungsschalter 51 auf. Der weitere Leistungsschalter 51 verbindet dabei einen Anschlusspunkt der Halbleiter-Schaltanordnung 15 mit dem von der Schaltvorrichtung 50 nicht abschaltbaren Pol, der in diesem Fall der Minuspol ist.

Im Normalbetrieb bei Stromleitung wird ein Schaltzustand eingestellt, der in Figur 5 gezeigt ist. Dabei sind wie bei der ersten Schaltvorrichtung 10 der erste und die zweite Leistungsschalter 11, 12 geschlossen. Im Gegensatz zur ersten Schaltvorrichtung 10 sind jedoch bei Stromleitung der dritte und vierte Leistungsschalter 13, 14 geöffnet. Der weitere Leistungsschalter 51 ist aber geschlossen. Dadurch fällt über beiden Leistungsschaltern 13, 14 die gesamte Netzspannung ab, die durch die beiden Leistungsschalter 13, 14 zu isolieren ist. Somit führen die ersten beiden Leistungsschalter 11, 12 den Strom und die Halbleiter-Schaltanordnung 15 steht unter der vollen Spannung. Somit steht vorteilhaft eine Versorgungsspannung für die Ansteuerung der Halbleiter-Schaltanordnung 15 ständig zur Verfügung. Ebenso wie bei der ersten Schaltvorrichtung 10 fließt jedoch über die Halbleiter-Schaltanordnung 15 bis auf den der Deckung des eigenen Energiebedarfs notwendigen Stroms im Wesentlichen kein Strom, da sie sich im spannungslosen Zustand befindet. Damit sind die Verluste gering.

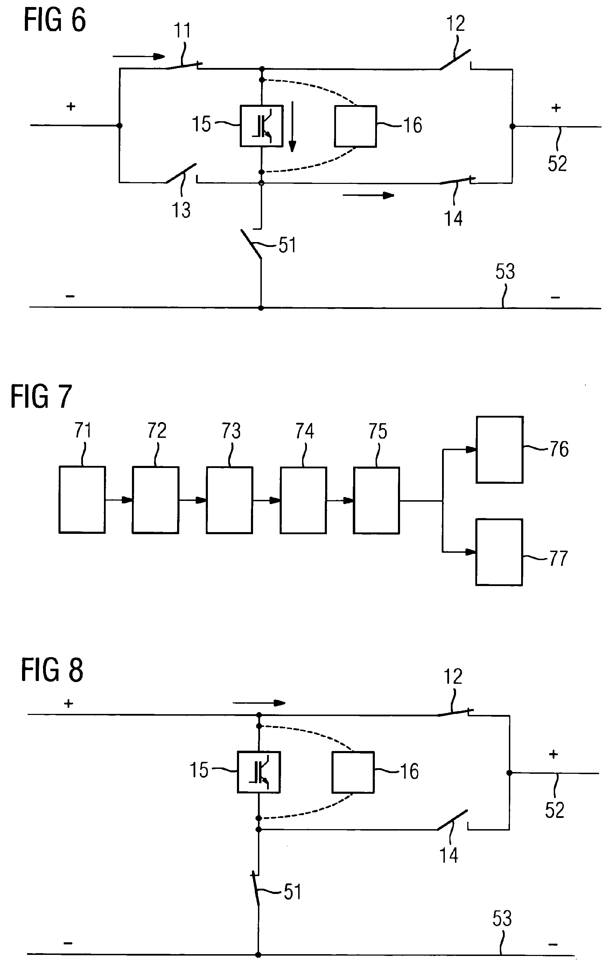

Beispielsweise im Falle eines erkannten Kurzschlusses wird nun ein Abschaltvorgang eingeleitet. Figur 7 zeigt hierzu einen ersten bis siebten Abschaltschritt 71 bis 77.

Im ersten Abschaltschritt 71 wird der weitere Leistungsschalter 51 geöffnet, um die Halbleiter-Schaltanordnung 15 vom Minuspol zu trennen. Es ist zweckmäßig, die Halbleiter-Schaltanordnung 15 dabei in einen ausgeschalteten Zustand zu überführen, so dass sie die volle Netzspannung aufbauen kann und der Strom durch die Halbleiter-Schaltanordnung 15 zu Null wird. Dann kann das Öffnen des weiteren Leistungsschalters 51 strom- und spannungslos erfolgen.

Bei der Beschreibung der weiteren Schaltvorgänge wird davon ausgegangen, dass der abzuschaltende Last- bzw. Kurzschlussstrom von der Seite des ersten Leistungsschalters 11 zur Seite des zweiten Leistungsschalters 12 fließt. Für eine umgekehrte Stromflussrichtung müssen die Schaltvorgänge entsprechend umgekehrt werden, d.h. hierfür müssen dann die komplementären Leistungsschalter betätigt werden.

Sobald der weitere Leistungsschalter 51 eine Stellung erreicht hat, in der er die volle Spannung isolieren kann, wird im zweiten Abschaltschritt 72 die Halbleiter-Schaltanordnung 15 derart angesteuert, dass sie leitfähig wird und damit ihre Klemmenspannung Null wird. Damit fällt über den weiteren Leistungsschalter 51 die volle Netzspannung ab. Anschließend schließt im dritten Abschaltschritt 73 der vierte Leistungsschalter 14. Nachdem der vierte Leistungsschalter 14 geschlossen ist, wird im vierten Abschaltschritt 74 der zweite Leistungsschalter 12 geöffnet. Hierdurch baut der zweite Leistungsschalter 12 eine Lichtbogenspannung auf, wodurch der Strom von ihm auf die Halbleiter-Schaltanordnung 15 und den vierten Leistungsschalter 14 kommutiert. Der Lichtbogen in dem zweiten Leistungsschalter 12 erlischt und der zweite Leistungsschalter 12 isoliert in der Folge. Dadurch ist ein Schaltzustand erreicht, der in Figur 6 dargestellt ist.

Im folgenden fünften Abschaltschritt 75 wird analog zur ersten Schaltvorrichtung 10 nun die Halbleiter-Schaltanordnung 15 kontrolliert abgeschaltet und die im DC-Kreis gespeicherte Energie im energieabsorbierenden Element 16 abgebaut. Kontrolliert abschalten bedeutet hierbei, dass die Halbleiter-Schaltanordnung 15 wohl definiert Spannung aufbaut und damit den abzuschaltenden Strom in vorher definierter Weise reduziert. Im vorliegenden Beispiel kann infolge der Reihenschaltung die Abschaltung in feinen Stufen erfolgen. Zudem erfolgt die Abschaltung geregelt. D.h., die Steuereinrichtung prüft sowohl den abzuschaltenden Strom als auch die Rückwirkungen aus dem DC-Netz bei der Abschaltung und reagiert darauf.

Optional können danach in einem sechsten Abschaltschritt 76 alle verbleibenden Leistungsschalter 11, 14 geöffnet werden und damit die gesamte Schaltvorrichtung 50 außer Betrieb gesetzt werden.

Alternativ ist es auch möglich, nur den vierten Leistungsschalter 14 in einem siebten Abschaltschritt 77 stromlos zu öffnen, aber den ersten Leistungsschalter 11 geschlossen zu lassen. Durch ein Schließen des weiteren Leistungsschalters 51 wird die Halbleiter-Schaltanordnung 15 wieder unter Spannung gesetzt und damit die Anordnung im siebten Abschaltschritt 77 wieder in eine Wiedereinschaltbereitschaft versetzt. Zum Einschalten wird nur noch der zweite Leistungsschalter 12 geschlossen, während die Halbleiter-Schaltanordnung 15 inaktiv bleibt.

Das beschriebene Prinzip funktioniert in beiden Stromflussrichtungen. Des Weiteren kann das Prinzip auch auf den negativen Pol einer HGÜ-(HVDC)Leitung entsprechend angewandt werden.

Ein drittes Ausführungsbeispiel in Form einer dritten Schaltvorrichtung 80 wird anhand von Figur 8 beschrieben. Die dritte Schaltvorrichtung 80 ist dabei gegenüber den ersten beiden Schaltvorrichtungen 10, 50 vereinfacht aufgebaut. Hierbei wird vorausgesetzt, dass sowohl abzuschaltender Nennstrom als auch abzuschaltender Kurzschlussstrom stets nur in eine Richtung fließen können, in diesem Fall in der durch den Pfeil in Figur 8 dargestellten Richtung. Die dritte Schaltvorrichtung 80 geht dabei aus der zweiten Schaltvorrichtung 50 hervor, indem der erste und dritte Leistungsschalter 11, 13 weggelassen werden. Dabei wird der erste Leistungsschalter 11 durch eine elektrische Direktverbindung ersetzt, während die elektrische Verbindung über dem dritten Leistungsschalter 13 komplett entfernt wird.

Figur 8 zeigt dabei die dritte Schaltvorrichtung 80 im leitenden Normalbetrieb. Auch hier fließt der Strom im leitenden Normalbetrieb über Leistungsschalter, in diesem Fall den zweiten Leistungsschalter 12, der geschlossen ist. Der vierte Leistungsschalter 14 ist geöffnet. Der weitere Leistungsschalter 51 ist im leitenden Normalbetrieb geschlossen. Der Abschaltvorgang erfolgt in der gleichen Weise wie bei der zweiten Schaltvorrichtung 50, wobei lediglich eine komplette Freischaltung der Halbleiter-Schaltanordnung 15 in diesem Fall nicht möglich ist und nicht durchgeführt wird. Es werden also zur Abschaltung bei der dritten Schaltvorrichtung 80 der erste bis fünfte Abschaltschritt 71...75 und der siebte Abschaltschritt 77 durchgeführt.

In einer möglichen alternativen Ausgestaltung der dritten Schaltvorrichtung 80 wird der erste Leistungsschalter 11 beibehalten, was ein völliges Freischalten der Halbleiter-Schaltanordnung 15 ermöglicht im sechsten Abschaltschritt 76.

## Patentansprüche

1. Schaltvorrichtung (10, 50, 80) zum Schalten bipolarer DC-Ströme in Hochspannungsnetzen mit
- wenigstens zwei elektromechanischen Schalteinheiten (11...14),
- einer Halbleiter-Schaltanordnung (15),
derart angeordnet, dass der DC-Strom in einem ersten Schaltstatus der elektromechanischen Schalteinheiten (11...14) über wenigstens eine der elektromechanischen Schalteinheiten (11...14) führbar ist, ohne dabei über die Halbleiter-Schaltanordnung (15) zu fließen, und dass der DC-Strom in einem zweiten Schaltstatus der elektromechanischen Schalteinheiten (11...14) zur Abschaltung über die Halbleiter-Schaltanordnung (15) führbar ist, **dadurch gekennzeichnet, dass**
die Halbleiter-Schaltanordnung (15) eine Mehrzahl von steuerbaren Leistungshalbleiterbauelementen und eine Einrichtung (16) zur Aufnahme der Schaltenergie bei einem Abschaltvorgang umfasst.

2. Schaltvorrichtung (10, 50, 80) gemäß Anspruch 1 mit einer weiteren elektromechanischen Schalteinheit (51), die als Verbindung eines der Anschlusspunkte der Halbleiter-Schaltanordnung (15) zum anderen Pol der DC-Leitung (53) geschaltet ist.

3. Schaltvorrichtung (10, 50) gemäß Anspruch 1 oder 2 mit vier elektromechanischen Schalteinheiten (11...14) in Vollbrückenanordnung.

4. Schaltvorrichtung (10, 50) gemäß Anspruch 3, bei der die Halbleiter-Schaltanordnung (15) als Verbindung der Mittelpunkte der beiden Brückenzweige geschaltet ist.

5. Schaltvorrichtung (10, 50, 80) gemäß einem der vorangehenden Ansprüche, bei der die Halbleiter-Schaltanordnung (15) eine Mehrzahl von Halbleiterzellen aufweist, die derart ausgestaltet sind, dass sie jeweils eine Teilspannung der an der Schaltvorrichtung (10, 50, 80) anliegenden Hochspannung aufnehmen.

6. Schaltvorrichtung (10, 50, 80) gemäß einem der vorangehenden Ansprüche, wobei die elektromechanischen Schalteinheiten (11...14, 51) jeweils eine Kombination mehrerer Schalter zum Schalten von Wechselströmen umfassen.

7. Schaltvorrichtung (10, 50, 80) gemäß einem der vorangehenden Ansprüche, derart ausgestaltet, dass zum Abschalten des Stroms wenigstens eine der elektromechanischen Schalteinheiten (11...14) geöffnet wird, wodurch der Strom auf die Halbleiter-Schaltanordnung (15) kommutiert.

8. Schaltvorrichtung (10, 50, 80) gemäß Anspruch 7, dass nach dem Kommutieren des Stroms zum Halbleiter-Schaltanordnung (15) diese abgeschaltet wird.

9. Schaltvorrichtung (10, 50, 80) gemäß Anspruch 7 oder 8, wobei nach dem Abschalten des Stroms die verbleibenden elektromechanischen Schalteinheiten (11...14) geöffnet werden.

10. Schaltvorrichtung (10, 50, 80) gemäß einem der vorangehenden Ansprüche, bei der die Einrichtung (16) zur Aufnahme der Schaltenergie bei einem Abschaltvorgang einen oder mehrere Hochspannungsableiter umfasst.

11. Schaltvorrichtung (10, 50, 80) gemäß einem der vorangehenden Ansprüche, bei der die Halbleiter-Schaltanordnung (15) eine Serienschaltung aus Halbleiterzellen umfasst, insbesondere aus Modular Multilevel Convertern.

## Claims

1. Switching device (10, 50, 80) for switching bipolar direct currents in high-voltage power supply systems, having
- at least two electromechanical switching units (11...14),
- a semiconductor switching arrangement (15),
arranged such that the direct current in a first switching state of the electromechanical switching units (11...14) can be conducted via at least one of the electromechanical switching units (11...14) without in this case flowing via the semiconductor switching arrangement (15), and such that the direct current in a second switching state of the electromechanical switching units (11...14) can be conducted via the semiconductor switching arrangement (15) for disconnection, **characterized in that** the semiconductor switching arrangement (15) comprises a plurality of controllable power semiconductor components and an element (16) for taking up the switching energy during a disconnection process.

2. Switching device (10, 50, 80) according to Claim 1, having a further electromechanical switching unit (51) which is switched so as to form a connection between one of the connection points of the semiconductor switching arrangement (15) and the other pole of the DC line (53).

3. Switching device (10, 50, 80) according to Claim 1 or 2, having four electromechanical switching units (11...14) in a full-bridge arrangement.

4. Switching device (10, 50, 80) according to Claim 3, in which the semiconductor switching arrangement (15) is switched so as to form a connection between the center points of the two bridge branches.

5. Switching device (10, 50, 80) according to one of the preceding claims, in which the semiconductor switching arrangement (15) has a plurality of semiconductor cells which are configured such that they take up in each case a partial voltage of the high voltage present across the switching device (10, 50, 80).

6. Switching device (10, 50, 80) according to one of the preceding claims, wherein the electromechanical switching units (11...14, 51) comprise in each case a combination of a plurality of switches for switching alternating currents.

7. Switching device (10, 50, 80) according to one of the preceding claims, configured such that at least one of the electromechanical switching units (11...14) is opened to disconnect the current, which causes commutation of the current onto the semiconductor switching arrangement (15).

8. Switching device (10, 50, 80) according to Claim 7, in which after the commutation of the current to the semiconductor switching arrangement (15), said arrangement is disconnected.

9. Switching device (10, 50, 80) according to Claim 7 or 8, wherein, after the disconnection of the current, the remaining electromechanical switching units (11...14) are opened.

10. Switching device (10, 50, 80) according to one of the preceding claims, in which the element (16) for taking up the switching energy during a disconnection process comprises one or more high-voltage arresters.

11. Switching device (10, 50, 80) according to one of the preceding claims, in which the semiconductor switching arrangement (15) comprises a series connection of semiconductor cells, in particular of modular multilevel converters.

## Revendications

1. Dispositif (10, 50, 80) de commutation pour faire passer des courants continus bipolaires dans des réseaux de haute tension, comprenant
- au moins deux unités (11...14) de commutation électromécaniques,
- un agencement (15) de commutation à semiconducteur,
monté de manière à ce que le courant continu, dans un premier état de commutation des unités (11...14) de commutation électromécaniques, puisse passer par au moins l'une des unités (11...14) de commutation électromécaniques, sans passer pour autant par l'agencement (15) de commutation à semiconducteur et de manière à ce que le courant continu, dans un deuxième état de commutation des unités (11...14) de commutation électromécaniques, puisse pour la déconnexion passer par l'agencement (15) de commutation à semiconducteur, **caractérisé en ce que**
l'agencement (15) de commutation à semiconducteur comprend une pluralité de composants à semiconducteur de puissance pouvant être commandés et un dispositif (16) d'absorption de l'énergie de commutation lors d'une opération de déconnexion.

2. Dispositif (10, 50, 80) de commutation suivant la revendication 1, comprenant une autre unité (51) de commutation électromécanique, qui est montée en liaison de l'un des points de connexion de l'agencement (15) de commutation à semiconducteur à l'autre pôle de la ligne (53) de courant continu.

3. Dispositif (10, 50, 80) de commutation suivant la revendication 1 ou 2, comprenant quatre unités (11...14) de commutation électromécaniques suivant un agencement en pont complet.

4. Dispositif (10, 50, 80) de commutation suivant la revendication 3, dans lequel l'agencement (15) de commutation à semiconducteur est monté en liaison du point médian des deux branches du pont.

5. Dispositif (10, 50, 80) de commutation suivant l'une des revendications précédentes, dans lequel l'agencement (15) de commutation à semi-conducteur a une pluralité de cellules de semiconducteur, qui sont conformées de manière à absorber respectivement une tension partielle de la haute tension appliquée au dispositif (10, 50, 80) de commutation.

6. Dispositif (10, 50, 80) de commutation suivant l'une des revendications précédentes, dans lequel les unités (11...14, 51) de commutation électromécaniques comprennent respectivement une combinaison de plusieurs commutateurs pour le passage de courant alternatif.

7. Dispositif (10, 50, 80) de commutation suivant l'une des revendications précédentes, conformées de manière à ce que, pour interrompre le courant, au moins l'une des unités (11...14) de commutation électromécaniques est ouverte de sorte que le courant commute sur l'agencement (15) de commutation à semi-conducteur.

8. Dispositif (10, 50, 80) de commutation suivant la revendication 7, en ce que, après la commutation du courant sur l'agencement (15) de commutation à semiconducteur, celui-ci est déconnecté.

9. Dispositif (10, 50, 80) de commutation suivant la revendication 7 ou 8, dans lequel, après l'interruption du courant, les unités (11...14) de commutation électromécaniques restantes sont ouvertes.

10. Dispositif (10, 50, 80) de commutation suivant l'une des revendications précédentes, dans lequel le dispositif (16) d'absorption de l'énergie lors d'une opération de déconnexion comprend un ou plusieurs parafoudres de haute tension.

11. Dispositif (10, 50, 80) de commutation suivant l'une des revendications précédentes, dans lequel l'agencement (15) de commutation à semiconducteur comprend un circuit série composé de cellules à semiconducteur, notamment de modular multilevel converter.
